# EUROPÄISCHE PATENTSCHRIFT

(11) **EP 4 143 468 B1**
(45) Veröffentlichungstag und Bekanntmachung des Hinweises auf die Patenterteilung: **29.05.2024**
(21) Anmeldenummer: 21723201.6
(22) Anmeldetag: 30.04.2021
(51) Int. Cl.: F16K 31/00, B60S 1/48

(54) **VENTILEINRICHTUNG, INSBESONDERE WISCHWASSERVENTIL**
VALVE DEVICE, IN PARTICULAR A WIPER LIQUID VALVE
DISPOSITIF DE SOUPAPE ET, PLUS SPÉCIFIQUEMENT, SOUPAPE DE LIQUIDE D'ESSUIE-GLACE

(30) Priorität: 30.04.2020 DE 102020205554
(43) Veröffentlichungstag der Anmeldung: 08.03.2023
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2021/061381
(87) Internationale Veröffentlichungsnummer: WO 2021/219841

(56) Entgegenhaltungen:
- EP-A1- 3 455 529
- JP-A- 2006 138 235

## Beschreibung

Die Erfindung betrifft eine Ventileinrichtung, insbesondere ein Wischwasserventil, mit einem Gehäuse, das einen Zulaufanschluss, einen Ablaufanschluss und einen den Zulaufanschluss mit dem Ablaufanschluss verbindenden Medienkanal aufweist, und mit einem verlagerbaren Ventilelement, das durch ein erstes Federelement gegen einen in dem Gehäuse ausgebildeten Ventilsitz gedrängt ist, um den Medienkanal zu verschließen, und das durch ein zweites Federelement von dem Ventilsitz wegbewegbar ist, um den Medienkanal zu öffnen, wobei das erste Federelement aus einem thermisch aktivierbaren Material gefertigt ist und in einem deaktivierten Zustand eine erste Federkraft aufweist, die kleiner ist als die des zweiten Federelements, und in einem aktivierten Zustand eine zweite Federkraft, die derart größer ist als die des zweiten Federelements, dass das Ventilelement zum Schließen des Medienkanals verlagert wird, wobei das erste Federelement zumindest abschnittsweise in einem hohlzylinderförmigen, nach außen von dem Gehäuse vorstehenden Gehäusevorsprung des Gehäuses gehalten ist. Dabei ist an dem Ventilelement ein insbesondere ringförmiges Dichtelement angeordnet, das dazu ausgebildet ist, mit dem Ventilsitz dichtend zusammenzuwirken.

Ventileinrichtungen der eingangs genannten Art sind aus dem Stand der Technik bereits bekannt. So offenbart beispielsweise die Offenlegungsschrift EP 3 455 529 A1 eine Ventileinrichtung der gattungsgemäßen Art. Weil derartige Ventileinrichtungen ein thermisch aktivierbares Federelement aufweisen, das in Abhängigkeit von einer auf das Ventil einwirkenden Temperatur schaltet, werden sie oft als Thermoventil oder Thermoventileinrichtung bezeichnet. So ist es bekannt, eine derartige Ventileinrichtung in einem Tank eines Kraftfahrzeugs mit flüssigem Medium, wie beispielsweise Scheibenwischwasser, Kühlmittel oder Schmiermittel oder dergleichen, anzuordnen, sodass das Gehäuse der Ventileinrichtung dem Medium und damit der Temperatur des Mediums ausgesetzt ist. Das thermisch aktivierbare Federelement ist dabei vorteilhafterweise in einem Gehäusevorsprung angeordnet, der von dem übrigen Gehäuse der Ventileinrichtung vorsteht, sodass das Federelement zu möglichst großen Teilen außerhalb des Gehäuses und innerhalb des Tanks liegt, sodass die Wärmeenergie des Mediums, in welchem die Ventileinrichtung angeordnet ist, schnell und mit geringen Verlusten auf das Federelement übertragen wird, sodass dieses zeitnah seine Aktivierungstemperatur erreicht und schaltet, sodass es die erhöhte Federkraft aufweist, durch welche das Ventilelement in dem Medienkanal gegen den Ventilsitz und entgegen der Federkraft des zweiten Federelements, das als Rückstellfeder wirkt, verlagert wird, sodass der Medienkanal dicht verschlossen und damit die Verbindung zwischen Zulaufanschluss und Ablaufanschluss sicher unterbrochen ist. Zur einfachen Montage ist in dem oben genannten Stand der Technik vorgesehen, dass das Gehäuse mehrteilig ausgebildet ist, wobei eine Teilung zwischen Zulaufanschluss und Ablaufanschluss vorgesehen ist. Die Offenlegungsschrift JP 2006 138235 A offenbart eine weitere Thermoventileinrichtung.

Der Erfindung liegt die Aufgabe zugrunde, eine verbesserte Ventileinrichtung zu schaffen, welche mit einfachen Mitteln einen dauerhaft sicheren Betrieb der Ventileinrichtung gewährleistet.

Die der Erfindung zugrundeliegende Aufgabe wird durch eine Ventileinrichtung mit den Merkmalen des Anspruchs 1 gelöst. Diese hat den Vorteil, dass mit einer einfachen konstruktiven Maßnahme eine Überanspruchung des Dichtelements sicher verhindert ist. Dadurch wird gewährleistet, dass das Dichtelement nicht aufgrund einer zu starken elastischen Verformung überansprucht und beschädigt werden kann. Darüber hinaus ergibt sich der Vorteil, dass das Dichtelement einfach und unter geringer elastischer Verformung auf dem Ventilelement anordenbar ist. Erfindungsgemäß ist dazu vorgesehen, dass das Ventilelement axial beabstandet von dem Dichtelement in Richtung zu dem Gehäusevorsprung zumindest einen Radialvorsprung aufweist, der dazu ausgebildet ist, mit zumindest einem in dem Gehäuse axial beabstandet zu dem Ventilsitz ausgebildeten Axialanschlag in Richtung des Ventilsitzes zur Begrenzung einer maximalen Verformung des Dichtelements zusammenzuwirken. Dadurch, dass der Radialvorsprung in Richtung zu dem Gehäusevorsprung beabstandet zu dem Dichtelement an dem Ventilelement ausgebildet ist, kann das Dichtelement einfach von der freien Stirnseite, die dem Medienkanal zugeordnet ist, auf das Ventilelement aufgeschoben und befestigt werden. Dadurch, dass der Radialvorsprung auf der abgewandten Seite angeordnet oder ausgebildet ist, reicht auf der dem Medienkanal zugewandten Seite des Ventilelements ein kleiner Radialvorsprung aus, welcher das Dichtelement auf dem Ventilelement formschlüssig axial zurückhält, und über welchen das Dichtelement bei seiner Montage unter elastischer Verformung geschoben werden muss. Dadurch wird das Dichtelement bei der Montage geschont und dennoch ein sicherer Sitz sowie ein sicheres Dichten in der Ventileinrichtung gewährleistet. Durch den vorteilhaften Radialvorsprung ist die Begrenzung der Verformung des Dichtelements einfach einerseits und der Axialanschlag und der Ventilsitz andererseits derart ausgebildet, dass der Abstand zwischen dem Axialanschlag und dem Ventilsitz geringfügig kleiner ist im Vergleich zu dem axialen Abstand zwischen Radialvorsprung und Ventilelement, sodass ein elastisches Verformen des Dichtelements an dem Dichtsitz gewährleistet, eine Überanspruchung des Dichtelements jedoch verhindert ist.

Gemäß einer bevorzugten Weiterbildung der Erfindung ist das Dichtelement als Elastomerelement, beispielsweise als O-Ring ausgebildet. Dadurch kann auf bereits bekannte Ausführungsform des Dichtelements zurückgegriffen werden, die in der erfindungsgemäßen ausgebildeten Ventileinrichtung vor einer Überlastung sicher geschützt ist. Durch die Ausbildung als O-Ring ergibt sich außerdem eine einfache Montage, wie zuvor bereits erwähnt, und eine kostengünstige Realisierung der Ventileinrichtung.

Besonders bevorzugt weist das Ventilelement eine Umfangsnut zur Aufnahme des Dichtelements auf. Dadurch ist eine sichere Arretierung des Dichtelements auf dem beziehungsweise an dem Ventilelement gewährleistet. Insbesondere weist die Umfangsnut einen Innendurchmesser auf, der zumindest im Wesentlichen dem Innendurchmesser des Dichtelements im entspannten Zustand entspricht, sodass das Ventilelement insbesondere vorspannungsfrei in der Umfangsnut gehalten ist, sodass es bei Nicht-Gebrauch nicht belastet ist. Insbesondere ist der Innendurchmesser der Umfangsnut derart gewählt, dass das Dichtelement radial über das Ventilelement vorsteht, um den Anlagekontakt mit dem Ventilsitz sicher zu gewährleisten. Durch die vorteilhafte Ausbildung der Ventileinrichtung ist gewährleistet, dass die Umfangsnut zumindest auf der dem Ventilsitz zugewandten Seite eine nur geringe Seitenwandhöhe aufweisen muss, weil das Ventilelement an dieser Seite keinen Axialanschlag aufweist oder aufweisen muss. Dadurch ist eine einfache Montage des Dichtelements in der Umfangsnut gewährleistet.

Gemäß einer bevorzugten Weiterbildung der Erfindung weist das Gehäuse einen weiteren Axialanschlag für den Radialvorsprung auf, der beabstandet zu dem Axialanschlag derart angeordnet ist, dass der Radialvorsprung axial nur zwischen den Axialanschlägen verschiebbar ist. Damit weist das Ventilelement nur einen Radialvorsprung auf, der jedoch in beide Schieberichtungen des Ventilelements, also in der Schieberichtung in Richtung des Ventilsitzes sowie in der entgegengesetzten Richtung, zusammenwirkt, um den Bewegungsweg des Ventilelements in der Ventileinrichtung beziehungsweise in dem Gehäuse der Ventileinrichtung zu begrenzen. Dadurch ist eine einfache konstruktive Ausgestaltung des Ventilelements sowie des Gehäuses gewährleistet.

Vorzugsweise ist der weitere Axialanschlag in oder an dem Gehäusevorsprung des Gehäuses ausgebildet. Damit ragt das Ventilelement mit dem Radialvorsprung axial gesehen bis zu oder bis in den Gehäusevorsprung, wodurch eine kompakte Ausgestaltung der Ventileinrichtung ermöglicht ist.

Gemäß einer bevorzugten Weiterbildung der Erfindung weist der Gehäusevorsprung an seiner freien, von dem Gehäuse abgewandten Seite einen Wärmeleitdorn auf, der in den Gehäusevorsprung hinein in Richtung des Ventilelements vorsteht und dadurch eine ringförmige Aufnahmetasche für einen Längsabschnitt des Federelements in dem Gehäusevorsprung bildet. Dadurch, dass der Wärmeleitdorn in den Gehäusevorsprung hinein vorsteht, wird der in der Aufnahmetasche befindliche Abschnitt des Federelements sowohl von außen, also durch eine Außenwand des Gehäusevorsprungs, als auch durch den Wärmeleitdorn von innen mit der Temperatur des Mediums beaufschlagt. Ist der Wärmeleitdorn massiv ausgebildet, so erfolgt die Wärmeleitung durch das Material des Wärmeleitdorns in den Innenraum des Gehäuses. Durch eine vorteilhafte Materialwahl ist hierbei ein guter Wärmeübergang beziehungsweise eine hohe Wärmeleitfähigkeit gewährleistet, die das frühzeitige Schalten der Ventileinrichtung ermöglicht. Hierdurch ergibt sich der Vorteil, dass ein Wärmeeintrag in das erste Federelement durch den Gehäusevorsprung hindurch verbessert wird. Insbesondere wird das Federelement nunmehr nicht nur von einer Seite, nämlich von außerhalb des Gehäusevorsprungs mit der Wärmeenergie des umgebenden Mediums beaufschlagt, sondern auch innerhalb des Gehäusevorsprungs. Dadurch ergibt sich, dass eine frühzeitige Schaltung beziehungsweise Aktivierung des thermisch sensiblen ersten Federelements (Thermofederelement) erfolgt, sodass ein Schalten der Ventileinrichtung zeitnah nach Erreichen der Aktivierungstemperatur durch das umgebende Medium gewährleistet ist. Gemäß einer bevorzugten Weiterbildung der Erfindung ist das erste Federelement als Schraubenfeder ausgebildet, die an dem Gehäusevorsprung auf dem Wärmeleitdorn aufgesteckt ist. Durch die Ausbildung als Schraubenfeder weist das Federelement im Querschnitt einen ringförmigen, insbesondere kreisringförmigen Querschnitt auf, dessen Innendurchmesser größer ist als der Außendurchmesser des Wärmeleitdorns, sodass die Schraubenfeder auf dem Wärmeleitdorn aufschiebbar und in die Aufnahmetasche einschiebbar ist. Dadurch ergibt sich neben der zuvor beschriebenen vorteilhaften Wärmeübertragung auf das erste Federelement außerdem der Vorteil einer sicheren axialen Führung und Ausrichtung der Schraubenfeder in dem Gehäuse der Ventileinrichtung. Außerdem wird durch die vorteilhafte Ausbildung des ersten Federelements mithilfe des Wärmeleitdorns die Montage der Ventileinrichtung erleichtert. Weiterhin ist bevorzugt vorgesehen, dass der Wärmeleitdorn als becherförmiger Hohldorn zu der Stirnseite des Gehäusevorsprungs hin offen ausgebildet ist. Damit dringt das umgebende Medium auch in den Wärmeleitdorn selbst ein, sodass das umgebende Medium das erste Federelement nicht nur von außen umgibt, sondern auch innerhalb der Schraubenfeder, nämlich innerhalb des hohlen Bereichs des Wärmeleitdorns vorhanden ist. Dadurch erfolgt ein noch direkterer Wärmeübergang von dem Medium in das Federelement beziehungsweise in die Schraubenfeder von zwei Seiten, nämlich von außen und von innen, sodass ein noch früheres Schalten der Ventileinrichtung gewährleistet ist. Vorzugsweise ist der Wärmeleitdorn aus einem Material mit einem hohen Wärmeleitfähigkeitswert gefertigt. Dazu ist der Wärmeleitdorn beispielsweise aus Aluminium, Silber, Kupfer oder Gold gefertigt. Durch die vorteilhafte Materialwahl wird die Schaltzeit der Ventileinrichtung, nachdem das umgebende Medium die Aktivierungstemperatur erreicht hat, weiter optimiert beziehungsweise verkürzt. Besonders bevorzugt ist der Ventilsitz als eine Fase in dem Medienkanal ausgebildet. Durch die Fase ist ein sicheres Andrücken des Ventilelements, insbesondere des Dichtelements auf dem Ventilelement gewährleistet, wodurch eine sichere Abdichtung des Medienkanals in aktiviertem Zustand des ersten Federelements gewährleistet ist.

Darüber hinaus ist die Ventileinrichtung bevorzugt derart ausgebildet, dass der Zulaufanschluss und/oder der Ablaufanschluss radial in den Medienkanal münden. Dadurch ist eine vorteilhafte Anordnung der Anschlüsse und des Medienkanals sowie des Ventilelements in dem Gehäuse gewährleistet, bei welcher der Zulaufanschluss durch das Ventilelement fluidtechnisch sicher von dem Ablaufanschluss trennbar ist.

Weiterhin ist bevorzugt vorgesehen, dass das Ventilelement zumindest im Wesentlichen unabhängig von seiner Schiebestellung zumindest abschnittsweise im Bereich des Zulaufanschluss, also im Bereich des Medienkanals, in welchem der Zulaufanschluss in dem Medienkanal mündet, in dem Medienkanal liegt. Damit liegt das Ventilelement stets im Bereich des Zulaufanschluss sodass es von dem zu regelnden beziehungsweise schaltenden Medium umspült oder benetzt ist, wodurch zum einen der Druck des zu schaltenden Mediums ebenfalls auf das Ventilelement in Schließrichtung wirkt, und wodurch zum anderen durch das zugeführte Medium verhindert wird, dass insbesondere ein optional vorgesehenes Dichtelement austrocknet. Weiterhin ist bevorzugt der Gehäusevorsprung von einem Gehäuseflansch, der von dem übrigen Gehäuse vorsteht, und einem stirnseitig an dem Gehäuseflansch angeordneten Deckel gebildet, wobei der Wärmeleitdorn an dem Deckel angeordnet ist. Durch die zweiteilige Ausbildung des Gehäusevorsprungs wird eine einfache Montierbarkeit der Ventileinrichtung geboten. So können das zweite Federelement, das Ventilelement und das erste Federelement nacheinander durch den Gehäuseflansch in den Medienkanal eingeführt und anschließend der Medienkanal beziehungsweise das Gehäuse durch den Deckel verschlossen werden. Durch die vorteilhafte Ausbildung des Wärmeleitdorns und die dadurch verfügbare Aufnahmetasche für das erste Federelement, insbesondere in Form der Schraubenfeder, ist bei der Montage eine sichere und einfache Führung des Deckels zu dem Gehäuseflansch hin gewährleistet, bei welcher insbesondere die Schraubenfeder an einem seitlichen Ausknicken oder Verkanten bei einer Montage gehindert ist. Besonders bevorzugt ist der Wärmeleitdorn einstückig mit dem Deckel ausgebildet, sodass eine vorteilhafte Wärmeleitung durch den Deckel in dem Wärmeleitdorn gewährleistet ist. Vorzugsweise ist der Deckel mit dem Gehäuseflansch stoffschlüssig verbunden, sodass zum einen die Dichtheit des Gehäuses zu dem umgebenden Medium gewährleistet ist, und sodass zum anderen auch an der Schnittstelle zwischen Deckel und Gehäuseflansch eine vorteilhafte Wärmeleitung gewährleistet ist, durch welche die Wärmeenergie des umgebenden Mediums auch im Bereich des Gehäuseflanschs auf das darin angeordnete Federelement wirkt, um ein frühzeitiges Schalten der Ventileinrichtung zu ermöglichen.

Weiterhin ist bevorzugt vorgesehen, dass der Deckel den weiteren Axialanschlag bildet. Damit stößt der Radialvorsprung des Ventilelements in Richtung des Gehäusevorsprungs an dem Deckel an, um den Verschiebeweg des Ventilelements zu begrenzen. Durch die Anlage an dem Deckel ist eine einfache und sichere Begrenzung des Verschiebewegs gewährleistet, wobei hier der Verschiebeweg durch eine entsprechende Ausformung des Deckels einfach und kostengünstig an unterschiedliche Randbedingungen angepasst werden kann.

Besonders bevorzugt weist das Ventilelement eine becherförmige Aufnahmevertiefung auf, in welcher die Schraubenfeder beziehungsweise das erste Federelement bereichsweise angeordnet ist. Durch die Aufnahmevertiefung ist eine sichere Montage der Schraubenfeder einerseits sowie eine sichere Betätigung des Ventilelements andererseits durch das erste Federelement gewährleistet. Die Schraubenfeder oder das erste Federelement ist vorgespannt zwischen dem Ventilelement und dem Deckel des Gehäuseflanschs beziehungsweise dem Gehäusevorsprung gehalten, unabhängig davon, ob es aktiviert oder nicht aktiviert ist. Dadurch ist eine eindeutige Lagerstellung des Ventilelements gewährleistet, weil es stets von dem ersten und von dem zweiten Federelement mit einer Federkraft beaufschlagt wird, unabhängig von dem Aktivierungszustand des ersten Federelements.

Gemäß einer bevorzugten Weiterbildung der Erfindung weist das Ventilelement einen in Richtung des ersten Federelements größer werdenden Querschnitt auf und der Medienkanal einen in Richtung des Deckels größer werdenden Querschnitt, sodass das Ventilelement durch den Gehäuseflansch in den Medienkanal axial einführbar ist. Die Querschnittsvergrößerung in Richtung des Deckels von Ventilelement und Medienkanal gewährleistet eine einfache Montage der Ventileinrichtung. Optional weisen das Ventilelement und/oder der Medienkanal einen oder mehrere Hinterschnitte auf - in Einführrichtung in den Medienkanal gesehen - jedoch ohne, dass das Ventilelement den Medienkanal in Einschubrichtung hintergreift. Vielmehr dienen dann die Hinterschnitte beziehungsweise Aussparungen oder Verjüngungen zur verbesserten Medienleitung.

Vorzugsweise ist zwischen dem Ventilelement und dem Gehäuseflansch ein Leckagespalt vorhanden. Der Leckagespalt gewährleistet, dass etwas von dem zu regelnden Medium, das durch den Zulaufanschluss in den Medienkanal strömt, in den Innenraum des Gehäuseflanschs gelangt, in welchem auch das erste Federelement liegt. Dadurch ist gewährleistet, dass der Gehäuseflansch mit Medium gefüllt ist, welches den Wärmeübergang von dem Gehäuseflansch und insbesondere auch von dem Wärmeleitdorn in das erste Federelement verbessert. Dadurch, dass nur ein Leckagespalt vorhanden ist, also ein Spalt, der nur einen geringen Strömungsfluss zulässt, befindet sich in dem Gehäuseflansch im Wesentlichen stehendes Medium, dessen Temperatur sich schnell mit der Temperatur des umgebenden Mediums verändern und dadurch das erste Federelement schalten kann.

Weiterhin ist bevorzugt vorgesehen, dass der Zulaufanschluss zwischen der Stufe und dem Ventilsitz in den Medienkanal mündet. Damit liegt der Zulaufanschluss zwischen dem Ventilsitz und dem Radialvorsprung des Ventilelements, sodass gewährleistet ist, dass im geschlossenen Zustand der Ventileinrichtung, wenn das Ventilelement gegen den Ventilsitz gedrückt ist, von dem zu schaltenden/zu regelnden Medium umströmt ist, sodass das Medium durch den zuvor genannten optionalen Leckagespalt in den Gehäusevorsprung eindringen kann.

Weiterhin ist bevorzugt das Dichtelement axial beabstandet von dem Radialvorsprung an dem Ventilelement angeordnet, sodass Dichtelement und Radialvorsprung unabhängig voneinander wirken und insbesondere die obenstehende Funktion gewährleistet wird, dass eine maximale elastische Verformung des Dichtelements durch den Radialvorsprung begrenzt wird.

Weiterhin ist bevorzugt der die Schraubenfeder enthaltene Raum des Gehäuses fluidtechnisch durch die Leckageöffnung mit dem Medienkanal, insbesondere mit dem Zulaufanschluss dauerhaft verbunden. Hierdurch ergibt sich der oben bereits genannte Vorteil, dass sich in dem Innenraum des Gehäusevorsprungs ein Medium befindet, welches zur Wärmeleitung in das erste Federelement in vorteilhafter Weise einwirkt.

Vorzugsweise ist das zweite Federelement als Schraubenfeder ausgebildet, einendig auf einen Axialvorsprung des Ventilelements aufgeschoben und axial zwischen dem Ventilelement und dem Gehäuse vorgespannt gehalten. Das zweite Federelement stützt sich somit axial an dem Gehäuse einerseits und an dem Ventilkörper andererseits ab, sodass der Ventilkörper durch das zweite Federelement mit einer Vorspannkraft beaufschlagt ist. Durch den Axialvorsprung ist eine vorteilhafte Radialführung der Schraubenfeder an dem Ventilelement gewährleistet. Vorzugsweise ragt der Axialvorsprung derart weit in den Medienkanal hinein, wenn sich das erste Federelement im deaktivierten Zustand befindet, dass das freie Ende des Axialvorsprungs einem Innenwandabschnitt des Medienkanals, an welchem die Schraubenfeder radial außen geführt ist, gegenüberliegt, sodass unabhängig von der Schiebestellung des Ventilelements die Schraubenfeder stets radial innen und/oder außen in der Ventileinrichtung geführt ist, sodass diese niemals ausknicken, verklemmen oder verspannen kann. Weiterhin ist bevorzugt vorgesehen, dass die Schraubenfedern axial fluchtend zu dem Medienkanal ausgerichtet und das Ventilelement axial in dem Medienkanal verschiebbar gelagert sind. Damit ergibt sich eine vorteilhafte Montage.

Vorzugsweise steht der Axialvorsprung zumindest im Wesentlichen von dem Dichtelement axial vor und ist insbesondere als radiale Führung für das zweite Federelement, wie vorstehend bereits erwähnt, ausgebildet. Dadurch, dass der Axialvorsprung von dem Dichtelement vorsteht, liegt das Dichtelement zurückgesetzt von dem freien Ende des Ventilelements und damit auch beabstandet von der Schraubenfeder beziehungsweise dem zweiten Federelement. Dadurch ist das Dichtelement in einem sicheren Bereich gehalten, in welchem es insbesondere nicht durch das zweite Federelement im Betrieb beschädigt werden kann.

Im Folgenden soll die Erfindung anhand der Zeichnung näher erläutert werden. Dazu zeigen
- Figur 1: eine vorteilhafte Ventileinrichtung in einem ersten Schaltzustand,
- Figur 2: die Ventileinrichtung in einem zweiten Schaltzustand, jeweils in einer vereinfachten Längsschnittdarstellung, und
- Figur 3: eine perspektivische Explosionsdarstellung der Ventileinrichtung.

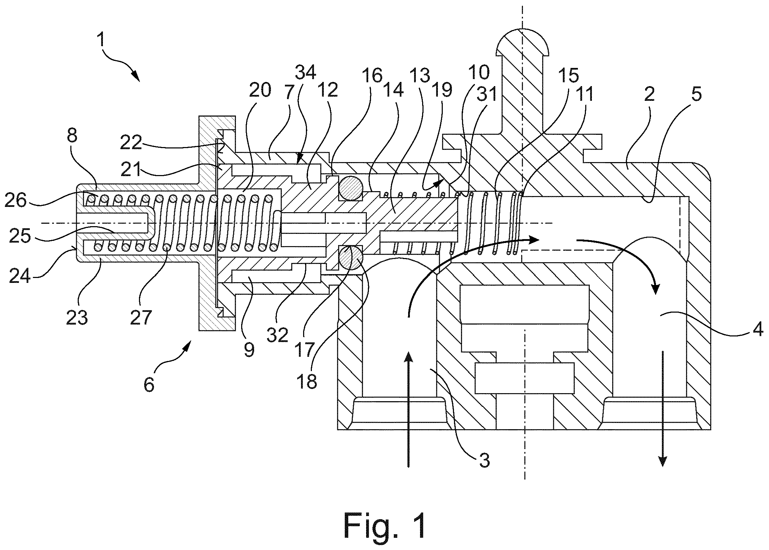

Figur 1 zeigt in einer vereinfachten Schnittdarstellung eine vorteilhafte Ventileinrichtung 1 zum Einbau in einem Tank, beispielsweise für Scheibenwischwasser eines Kraftfahrzeugs. Die Ventileinrichtung 1 weist ein Gehäuse 2 auf, das einen Zulaufanschluss 3 und einen Ablaufanschluss 4 für ein flüssiges und/oder gasförmiges Medium aufweist. Der Zulaufanschluss 3 und der Ablaufanschluss 4 sind dabei als parallel zueinander ausgerichtete Kanäle in dem Gehäuse 2 ausgebildet, die in einen Medienkanal münden. Dabei sind Zulaufanschluss 3 und Ablaufanschluss 4 radial beziehungsweise senkrecht zur Längserstreckung des vorliegend geradlinig verlaufenden Medienkanals 5 ausgerichtet, sodass sie auch radial in den Medienkanal 5 axial beabstandet zueinander münden. Der Medienkanal 5 ist einendig an der Seite der Ablauföffnung 4 geschlossen ausgebildet, und anderendig führt der Medienkanal 5 in einen von dem Gehäuse 2 vorstehenden Gehäusevorsprung 6. Der Gehäusevorsprung 6 weist einen einstückig mit dem Gehäuse 2 ausgebildeten und in Axialerstreckung des Medienkanals 5 vorstehenden Gehäuseflansch 7 auf, der stirnseitig durch einen Deckel 8 verschlossen ist. Der Deckel 8 ist im Längsschnitt becherförmig ausgebildet, sodass der Deckel 8 zusammen mit dem Gehäuseflansch 7 einen Innenraum 9 ausbildet, der mit dem Medienkanal 5 fluchtet.

Der Gehäuseflansch 7 weist einen Querschnitt auf, der größer ist als der des in dem Gehäuse 2 verlaufenden Medienkanals 5, wobei der Medienkanal 5 selbst zwei den Querschnitt in Richtung des Ablaufanschlusses 4 verjüngende Stufen 10 und 11 aufweist. Die Stufe 10 grenzt dabei an den Zulaufanschluss 3 auf der dem Ablaufanschluss 4 zugewandten Seite des Medienkanals 5 an. Die Stufe 11 liegt zwischen der Stufe 10 und dem Ablaufanschluss 4 in dem Medienkanal 5. Vorzugsweise sind die Stufen 10 und 11 vollumfänglich in dem Medienkanal 5 ausgebildet, sodass sie sich jeweils über den Umfang des Medienkanals 5 vollständig ringförmig erstrecken. In Figur 1 ist beispielhaft dargestellt, dass sich der Anschlag der Stufe 11 auch nur bereichsweise über den Umfang des Medienkanals 5 erstrecken kann. Die optionale vollständige Erstreckung ist in Figur 1 durch gestrichelte Linien angedeutet.

Im Bereich des Zulaufanschluss 3 und des Gehäusevorsprungs 6 ist ein kolbenförmiges Ventilelement 12 angeordnet, das axial zu dem Medienkanal 5 verschiebbar ist. Das Ventilelement 12 weist einendig einen Axialvorsprung 13 auf, der dazu ausgebildet ist, in den Medienkanal 5 in Richtung des Ablaufanschlusses 4 einzudringen. Der Axialvorsprung 13 weist beabstandet zu seinem freien Ende eine den Querschnitt vergrößernde Stufe 14 auf, die als Axialanschlag für ein Federelement 15 dient. Das Federelement 15 ist vorliegend als Schraubenfeder ausgebildet, die sich einendig an der Stufe 14 und anderendig an der Stufe 11 des Gehäuses 2 abstützt. Die Schraubenfeder ist dabei axial vorgespannt zwischen dem Ventilelement 12 und dem Gehäuse 2 gehalten, sodass das Federelement 15 das Ventilelement 12 in Richtung des Deckels 8 mit einer Federkraft beaufschlagt.

Auf der von der freien Stirnseite abgewandten Seite der Stufe 14 weist das Ventilelement 12 eine weitere Stufe 16 auf, die einen größeren Querschnitt aufweist, als die Stufe 14. Zwischen den Stufen 14 und 16 ist eine ringförmige Vertiefung 17 als Umfangsnut in dem Ventilelement 12 ausgebildet. In dieser Vertiefung 17 ist ein ringförmiges Dichtelement 18 angeordnet und durch die Stufen 14 und 16 axial formschlüssig an dem Ventilelement 12 gehalten. Das Dichtelement 18 ist dabei als elastisch verformbares Dichtelement, insbesondere als Elastomerelement, vorliegend in Form eines O-Rings ausgebildet, dessen Innendurchmesser kleiner ist als der Außendurchmesser der kleineren Stufe 14.

Das Dichtelement 18 weist dabei einen Durchmesser auf, der im Wesentlichen dem Durchmesser der Stufe 10 entspricht, wobei das Ventilelement 12 derart weit in den Medienkanal 5 mit dem Ende 13 hineinschiebbar ist, dass das Dichtelement 18 gegen die Stufe 10 gedrückt wird, wodurch eine fluidtechnische Verbindung zwischen dem Zulaufanschluss 3 und dem Ablaufanschluss 4 unterbrochen beziehungsweise der Medienkanal 5 zwischen Zulauföffnung 3 und Ablaufanschluss 4 geschlossen wird. Die Stufe 10 bildet somit einen Ventilsitz 19 für das Dichtelement 18 des Ventilelements 12.

Auf dem von dem Axialvorsprung 13 abgewandten Ende weist das Ventilelement 12 eine axiale Aufnahmevertiefung 20 auf, welche der becherförmigen Vertiefung des Deckels 8 gegenüberliegt. Darüber hinaus weist dieses Ende einen Radialvorsprung 21 auf, der sich über den gesamten Umfang des Ventilelements 12, das zumindest im Wesentlichen rotationssymmetrisch ausgebildet ist, erstreckt. Der Radialvorsprung 21 dient als Axialanschlag an der dem Gehäuse 2 zugewandten Stirnseite 22 des Deckels 8. Der Außenradius des Radialvorsprungs 21 ist dabei geringfügig kleiner als der Innendurchmesser des Gehäuseflansches 7, sodass das Ventilelement 12 axial in dem Gehäuseflansch 7 verlagerbar ist, wobei der Radialvorsprung 22 zur radialen Führung des Ventilelements 12 dient. Dadurch, dass der Außendurchmesser des Radialvorsprungs 21 jedoch geringfügig kleiner ist als der Innendurchmesser des Gehäuseflansches 7 ist ein Leckagespalt gewähreistet, durch welchen ein Medium an dem Radialvorsprung 21 vorbei strömen kann.

Der Deckel 8 ist becherförmig ausgebildet und verlängert dadurch den Gehäusevorsprung 7. Dazu weist der Deckel 8 einen zylinderförmigen Vorsprung 23 auf, der sich fluchtend zu der Aufnahme 20 des Ventilelements 12 erstreckt und an der auskragenden Stirnseite 22 des Deckels 8, welche dem Gehäuseflansch gegenüberliegt, endet. Das von dem Gehäuseflansch 7 abgewandte Ende des Deckels 8 beziehungsweise des Vorsprungs 23 ist geschlossen ausgebildet, wodurch der Deckel 8 seine Becherform erhält, wobei in der freien und geschlossenen Stirnseite 24 des Vorsprungs 23 ein Wärmeleitdorn 25 ausgebildet ist, der als Hohldorn sich in Richtung des Gehäuseflansches 7 in den Vorsprung 23 hinein erstreckt. Der Wärmeleitdorn 25 ist koaxial zu dem Vorsprung 23 ausgebildet, sodass zwischen dem Wärmeleitdorn 25 und dem Vorsprung 23 eine ringförmige Aufnahmetasche 26 gebildet ist. Der Wärmeleitdorn 25 ist zur Stirnseite 24 hin offen ausgebildet, sodass ein das Gehäuse 2 umgebendes Medium in den Wärmeleitdorn 25 hinein strömen kann. Gemäß einem alternativen Ausführungsbeispiel ist der Wärmeleitdorn 25 geschlossen, insbesondere massiv ausgebildet. Vorteilhafterweise ist der Wärmeleitdorn 25 einstückig mit dem Deckel 8 ausgebildet, wobei der Wärmeleitdorn 25 aus einem Material mit einem hohen Wärmeleitfähigkeitswert, wie beispielsweise aus Silber, Gold, Kupfer oder Aluminium gefertigt ist.

Zwischen dem Ventilelement 12 und dem Deckel 8 ist ein Federelement 27 axial vorgespannt gehalten. Dazu ist das Federelement 27 als Schraubenfeder ausgebildet, die einendig an dem Boden der Aufnahme 20 des Ventilelements 12 axial anliegt, und anderendig an dem Boden der Aufnahmetasche 26. Dazu ist die Schraubenfeder bereichsweise in die Aufnahmetasche 26 einbeziehungsweise auf den Wärmeleitdorn 25 aufgesteckt, sodass sich dieser in die Schraubenfeder hinein erstreckt.

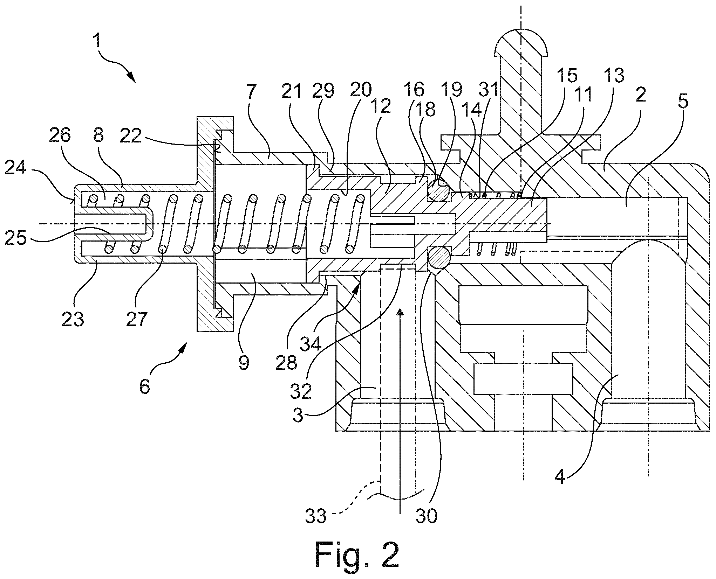

Die Schraubenfeder ist aus einem thermisch aktivierbaren Material, beispielsweise aus einer Formgedächtnislegierung, gefertigt, sodass das Federelement 27 zwei Zustände mit unterschiedlichen Federkräften aufweist. Unterhalb einer Aktivierungstemperatur weist das Federelement 27 eine erste Federkraft auf, die niedriger ist als die Federkraft des Federelements 15. In dem ersten Zustand drängt somit das Federelement 15 das Ventilelement 12 in die in Figur 1 gezeigte Stellung, in welcher das Dichtelement 18 beabstandet zu dem durch die Stufe 10 gebildeten Dichtsitz in dem Medienkanal 5 angeordnet ist, sodass die Verbindung zwischen dem Zulaufanschluss 3 und dem Ablaufanschluss 4 hergestellt ist und ein dem Zulaufanschluss zugeführtes Medium durch die Ventileinrichtung strömt, wie durch die Pfeile in Figur 1 gezeigt. Bei dem Medium handelt es sich beispielsweise um das Kühlmittel von einem Kühlmittelkreislauf des hier nicht näher dargestellten Kraftfahrzeugs. Wird die Aktivierungstemperatur des Federelements 27 überschritten, so wird das Federelement 27 aktiviert und weist dadurch eine Federkraft auf, die größer ist als die des Federelements 15. In Folge dessen wird das Ventilelement 12 durch die Federkraft des nunmehr aktivierten Federelements 27 entgegen der Federkraft des Federelements 15 mit dem Dichtelement 18 gegen den Ventilsitz 19 geschoben, sodass der Medienkanal 5 verschlossen und die Verbindung zwischen dem Zulaufanschluss 3 und dem Ablaufanschluss 4 unterbrochen wird, wie in Figur 2 beispielhaft gezeigt.

Figur 2 zeigt die Ventileinrichtung 1 aus Figur 1 in dem zweiten Schaltzustand, ebenfalls in einer Schnittdarstellung. Aus Figur 1 bereits bekannte Elemente, sind daher mit den gleichen Bezugszeichen versehen. Wie eingangs bereits erwähnt, ist die Ventileinrichtung 1 in einem Tank angeordnet oder anordenbar, der zur Aufbewahrung eines insbesondere flüssigen Betriebsmittels dient, wie beispielsweise ein Öltank, Kraftauftank, Abgasnachbehandlungsmitteltank oder eben Scheibenwischwassertank. Damit ist das Gehäuse 2 der Ventileinrichtung 1 bei bestimmungsgemäßem Gebrauch von einem insbesondere temperierten Medium umgeben. Durch den vorteilhaften Wärmeleitdorn 25 gelangt das Medium auch in einen Bereich innerhalb des Federelements 23, sodass das Federelement 23 sowohl radial von außen als auch radial von innen mit der Wärmeenergie des die Ventileinrichtung 1 umgebenden Mediums beaufschlagt wird.

Zwischen dem Ventilelement 12 und dem Gehäuse 2 ist unabhängig von der Schiebestellung des Ventilelements 12 stets ein Leckagespalt 28 vorhanden, durch welche das von dem Zulaufanschluss 3 kommende Medium in den Innenraum 9 und damit auch in den Innenraum des Deckels 8 gelangen kann. Es ergibt sich dadurch im Normalbetrieb, dass in dem Innenraum des Gehäusevorsprungs 6 Flüssigkeit beziehungsweise flüssiges Medium steht, das ebenfalls als Wärmeübertrager dient. Somit erfolgt nunmehr eine Wärmeübertragung von dem umgebenen Medium durch den Deckel 8, der aus einem Material mit hoher Wärmeleitfähigkeit gefertigt ist, in das Medium im Innenraum 9 des Gehäusevorsprungs 6 und/oder direkt in das Federelement 27. Durch die vorteilhafte Ausbildung insbesondere des Wärmeleitdorns 25 wird erreicht, dass das Federelement 27 durch das umgebene Medium besonders schnell auf die Temperatur des umgebenen Mediums aufgewärmt wird und dadurch beispielsweise besonders schnell die Aktivierungstemperatur überschreitet. Es erfolgt somit ein zeitnaher Schaltvorgang der Wärmeeinrichtung 1 in Abhängigkeit von der Temperatur des umgebenen Mediums.

Der Radialvorsprung 21 des Ventilelements 12 ist axial zwischen dem Deckel 8 und einer in dem Gehäuseflansch 7 ausgebildeten Stufe 29 verlagerbar. Der Radialvorsprung 21 und die Stufe 29 sind dabei derart ausgebildet, dass sie eine maximale Verformung des Dichtelements 18 begrenzen. Dadurch wird einerseits ein dichtender Sitz des Dichtelements 18 an dem Gehäuse 2 gewährleistet, wenn die Aktivierungstemperatur des Federelements 27 überschritten wurde, und gleichzeitig wird gewährleistet, dass das Dichtelement 18 nicht überlastet wird, wodurch eine hohe Lebensdauer der Ventileinrichtung 1 gewährleistet wird. Dadurch, dass sich das Ventilelement 12 im Bereich des Zulaufanschlusses 3 befindet, ist gewährleistet, dass das Dichtelement 18 außerdem dauerhaft von dem Zug durch den Zulaufanschluss 3 zugeführten Medium benetzt erst, sodass ein Austrocknen des Dichtelements 18 verhindert wird. Dazu ist auch im geschlossenen Zustand der Ventileinrichtung 1, wie in Figur 2 gezeigt, eine Öffnung 30 zwischen dem Ventilelement 12 und dem Gehäuse 2 vor, die zu dem Dichtelement 18 führt.

Der Axialvorsprung 13 des Ventilelements 12 ist weiterhin derart lang ausgebildet, dass die Schraubenfeder des Federelements 15 über ihre Gesamtlänge stets radial entweder durch das Ende 13 des Ventilelements 12 und/oder durch die Innenseite des Medienkanals 5 im Gehäuse 2 radial geführt beziehungsweise gehalten und gestützt ist. Im geöffneten Zustand, wie in Figur 1 dargestellt, also solange die Aktivierungstemperatur des Federelements 27 nicht überschritten wurde und das Federelement 27 nicht aktiviert ist, ragt damit der Axialvorsprung 13 bis in den Bereich des Medienkanals 5 stromabwärts der Stufe 10 hinein, in welchem die Schraubenfeder des Federelements 15 an einem Innenwandabschnitt 31 des Medienkanals 5 geführt ist. Durch diese Überschneidung beziehungsweise aneinander Angrenzung der radialen Führungen der Schraubenfeder in axialer Richtung ist gewährleistet, dass die Schraubenfeder 15 stets geführt in dem Medienkanal vorliegt und nicht ausknicken, verkanten oder verklemmen kann.

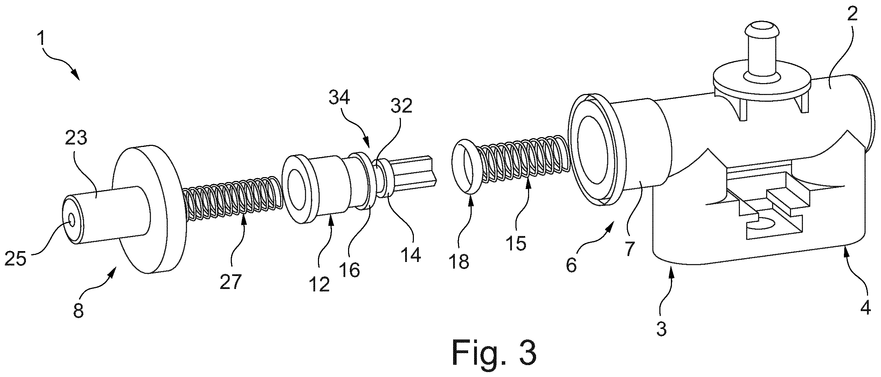

Die Figur 3 zeigt in einer vereinfachten perspektivischen Explosionsdarstellung die Ventileinrichtung 1. Hier ist gut zu erkennen, dass die vorteilhafte Ausbildung der Ventileinrichtung 1 außerdem auch eine einfache Montage erlaubt. Durch den Querschnitt des Medienkanals 5, der sich in Richtung des Deckels 8 vergrößert, und durch den Querschnitt des Ventilelements 12, das sich ebenfalls in Richtung des Deckels 8 im Wesentlichen vergrößert, ist gewährleistet, dass bei der Montage zunächst das Federelement 15, anschließend das Ventilelement 12 mit dem Dichtring 10 und anschließend das Federelement 27 durch den Gehäuseflansch 7 in den Medienkanal 5 eingeführt werden können. Durch die vorteilhafte Aufnahmetasche 26 in den Deckel 8 ist gewährleistet, dass dann, wenn der Deckel 8 auf das Federelement 27 aufgeschoben und dadurch die Federelemente 27 und 15 vorgespannt werden, insbesondere das Federelement 27 nicht seitlich ausbrechen oder sich von dem Deckel 8 bei der Montage lösen kann.

Gemäß dem vorliegenden Ausführungsbeispiel der Figuren 1 bis 3 weist die Ventileinrichtung 1 außerdem eine vorteilhafte Montagehilfe 34 auf, die es beispielsweise dem Monteur erleichtert, bei der Montage der Ventileinrichtung 1 das Ventilelement 12 entgegen der Federkraft des Federelements 15 in dem Innenraum 9 des Gehäuseflanschs 7 eingeschoben zu halten, sodass ohne besonderen Kraftaufwand das Federelement 27 und insbesondere der Deckel 8 an dem freien Ende des Gehäuseflansches 7 befestigt werden können. Durch die Montagehilfe 34 wird insbesondere verhindert, dass bei der Montage des Deckels 8 eine oder eine hohe Federspannung der Federelemente 15 und 27 auf den Deckel 8 wirkt, sodass der Deckel 8 auch beispielsweise an dem Gehäuseflansch 7 verklebt oder verschweißt werden kann, ohne dass hierfür zusätzliche Klemmvorrichtungen an dem Deckel 8 und/oder Gehäuseflansch 7 benötigt werden.

Die Montagehilfe 34 weist dazu eine Umfangsnut 32 in der Mantelaußenseite des Ventilelements 12 auf, die axial zwischen der Stufe 16 und dem Radialvorsprung 21 des Ventilelements 12 liegt. Insbesondere ist dabei die Umfangsnut 32 nahe zu der Stufe 16 in axialer Erstreckung des Ventilelements 12 gesehen ausgebildet. Dabei ist die Position der Umfangsnut 32 insbesondere derart gewählt, dass im eingeschobenen Zustand des Ventilelements 12, in welchem dieses insbesondere an der Dichtfläche 19 anliegt, die Umfangsnut 32 auf Höhe des Zulaufanschluss 3 liegt, wie in Figur 2 gezeigt. Bei der Montage der Ventileinrichtung 1 ist ein Werkzeug 33 durch den Zulaufanschluss 3 in das Gehäuse 2 derart einführbar, dass es in die Umfangsnut 32 eingreift, wie beispielhaft in Figur 2 mit gestrichelten Linien gezeigt. Hierzu kann beispielsweise ein Werkzeug in der Art eines Maulschlüssels oder Schraubenschlüssel genutzt werden, der auf das Ventilelement 12 im Bereich der Umfangsnut 32 aufschiebbar ist, sodass der Maulschlüssel insbesondere axial formschlüssig in der Umfangsnut 32 einliegt und dadurch der Federkraft des Federelements 15 entgegenwirkt und dadurch ein Verlagern des Ventilelements 12 in Richtung des Deckels 8 verhindert. Nach erfolgter Montage des Deckels 8 auf dem Gehäuseflansch 7 kann das Werkzeug 33 wieder entfernt und dadurch die Federkraft des Federelements 15 freigegeben beziehungsweise auf das Ventilelement 12 ausgeübt werden.

## Patentansprüche

1. Ventileinrichtung (1), insbesondere Wischwasserventil, mit einem Gehäuse (2), das einen Zulaufanschluss (3), einen Ablaufanschluss (4) und einen den Zulaufanschluss (3) mit dem Ablaufanschluss (4) verbindenden Medienkanal (5) aufweist, und mit einem verlagerbaren Ventilelement (12), das durch ein erstes Federelement (27) gegen einen in dem Gehäuse (2) ausgebildeten Ventilsitz (19) gedrängt ist, um den Medienkanal (5) zu verschließen, und das durch ein zweites Federelement (15) von dem Ventilsitz weggedrängt wird, um den Medienkanal (5) zu öffnen, wobei das erste Federelement (27) aus einem thermisch aktivierbaren Material gefertigt ist und in einem deaktivierten Zustand eine erste Federkraft aufweist, die kleiner ist als die des zweiten Federelements (15), und in einem aktivierten Zustand eine zweite Federkraft, die derart größer ist als die des zweiten Federelements (15), dass das Ventilelement (12) zum Schließen des Medienkanals (5) verlagert wird, wobei das erste Federelement (27) zumindest abschnittsweise in einem hohlzylinderförmigen, nach außen von dem Gehäuse (2) vorstehenden Gehäusevorsprung (6) gehalten ist, **dadurch gekennzeichnet, dass** an dem Ventilelement (12) ein insbesondere ringförmiges Dichtelement (18) angeordnet ist, das dazu ausgebildet ist, mit dem Ventilsitz (19) in dem aktivierten Zustand des ersten Federelements zusammenzuwirken, und dass das Ventilelement (12) axial beabstandet von dem Dichtelement (18) in Richtung zu dem Gehäusevorsprung (6) zumindest einen Radialvorsprung (21) aufweist, der dazu ausgebildet ist, mit zumindest einem in dem Gehäuse (2) axial beabstandet zu dem Ventilsitz (19) ausgebildeten Axialanschlag (29) in Richtung des Ventilsitzes (19) zur Begrenzung einer maximalen Verformung des Dichtelements (18) zusammenzuwirken.

2. Ventileinrichtung nach Anspruch 1, **dadurch gekennzeichnet, dass** das Dichtelement (18) als Elastomerelement, insbesondere als O-Ring ausgebildet ist.

3. Ventileinrichtung nach einem der vorhergehenden Ansprüche, **dadurch gekennzeichnet, dass** das Ventilelement (12) eine Umfangsnut (17) zur bereichsweisen Aufnahme des Dichtelements (18) aufweist.

4. Ventileinrichtung nach einem der vorhergehenden Ansprüche, **dadurch gekennzeichnet, dass** das Gehäuse (2) einen weiteren Axialanschlag für den Radialvorsprung (21) aufweist, der beabstandet zu dem Axialanschlag (29) derart angeordnet ist, dass der Radialvorsprung (21) axial nur zwischen den Axialanschlägen verschiebbar ist.

5. Ventileinrichtung nach einem der vorhergehenden Ansprüche, **dadurch gekennzeichnet, dass** der weitere Axialanschlag in oder an dem Gehäusevorsprung (6) ausgebildet ist.

6. Ventileinrichtung nach einem der vorhergehenden Ansprüche, **dadurch gekennzeichnet, dass** der Zulaufanschluss (3) und/oder der Ablaufanschluss (4) radial in dem Medienkanal (5) münden.

7. Ventileinrichtung nach einem der vorhergehenden Ansprüche, **dadurch gekennzeichnet, dass** das Ventilelement (12) zumindest im Wesentlichen unabhängig von seiner Schiebestellung zumindest abschnittsweise im Bereich des Zulaufkanals in dem Medienkanal (5) liegt.

8. Ventileinrichtung nach einem der vorhergehenden Ansprüche, **dadurch gekennzeichnet, dass** der Gehäusevorsprung (6) von einem Gehäuseflansch (7) und einem stirnseitig an dem Gehäuseflansch (7) angeordneten Deckel (8) gebildet ist, wobei ein Wärmeleitdorn (25) an dem Deckel (8) angeordnet insbesondere einstückig mit dem Deckel (8) ausgebildet ist.

9. Ventileinrichtung nach Anspruch 8, **dadurch gekennzeichnet, dass** der Deckel (10) den weiteren Axialanschlag bildet.

10. Ventileinrichtung nach einem der vorhergehenden Ansprüche, **dadurch gekennzeichnet, dass** das Ventilelement (12) eine becherförmige Aufnahmevertiefung (20) aufweist, in welcher das erste Federelement (27) bereichsweise eingesteckt ist.

11. Ventileinrichtung nach Anspruch 8, **dadurch gekennzeichnet, dass** das Ventilelement (12) einen in Richtung des ersten Federelements (27) größer werdenden Querschnitt aufweist, und dass der Medienkanal (5) einen in Richtung des Deckels (8) größer werdenden Querschnitt aufweist, sodass das die Federelemente (15, 27) und das Ventilelement (12) durch den Gehäuseflansch (7) in den Medienkanal (5) einführbar sind.

12. Ventileinrichtung nach einem der vorhergehenden Ansprüche, **dadurch gekennzeichnet, dass** zwischen dem Ventilelement (12) und dem Gehäuseflansch (6) ein Leckagespalt (28) vorhanden ist.

13. Ventileinrichtung nach einem der vorhergehenden Ansprüche, **dadurch gekennzeichnet, dass** der Zulaufanschluss (3) zwischen der Stufe (29) und dem Ventilsitz (19) in den Medienkanal (5) mündet.

14. Ventileinrichtung nach einem der vorhergehenden Ansprüche, **dadurch gekennzeichnet, dass** der das erste Federelement (27) enthaltene Raum des Gehäuses (2) fluidtechnisch durch den Leckagespalt (28) mit dem Zulaufanschluss (3) dauerhaft verbunden ist.

15. Ventileinrichtung nach einem der vorhergehenden Ansprüche, **dadurch gekennzeichnet, dass** das zweite Federelement (15) als Schraubenfeder ausgebildet, einendig auf einen Axialvorsprung (13) des Ventilelements (12) aufgeschoben und axial zwischen dem Ventilelement (12) und dem Gehäuse (2) vorgespannt ist.

16. Ventileinrichtung nach einem der vorhergehenden Ansprüche, **dadurch gekennzeichnet, dass** der Axialvorsprung (13) zumindest im Wesentlichen von dem Dichtelement (18) axial vorsteht und insbesondere als radiale Führung für zumindest einen Abschnitt des zweiten Federelements (15) ausgebildet ist.

## Claims

1. Valve device (1), in particular a wiper liquid valve, with a housing (2) which comprises an inlet connection (3), an outlet connection (4) and a media channel (5) connecting the inlet connection (3) to the outlet connection (4), and with a displaceable valve element (12), which is urged against a valve seat (19) formed in the housing (2) by a first spring element (27) in order to close the media channel (5), and which is urged away from the valve seat in order to open the media channel (5) by a second spring element (15), wherein the first spring element (27) is made of a thermally activatable material and comprises, in a deactivated state, a first spring force which is smaller than that of the second spring element (15), and, in an activated state, a second spring force which is greater than that of the second spring element (15) such that the valve element (12) is displaced to close the media channel (5), wherein the first spring element (27) is held at least partially in a hollow cylindrical housing projection (6) protruding outwards from the housing (2), **characterised in that** an in particular annular sealing element (18) is arranged on the valve element (12) which is designed to interact with the valve seat (19) in the activated state of the first spring element, and **in that** the valve element (12) comprises, axially spaced apart from the sealing element (18) in the direction of the housing projection (6), at least one radial projection (21) which is designed to interact with at least one axial stop (29) formed in the housing (2) axially spaced apart from the valve seat (19) in the direction of the valve seat (19) in order to limit maximum deformation of the sealing element (18).

2. Valve device according to claim 1, **characterised in that** the sealing element (18) is designed as an elastomer element, in particular as an O-ring.

3. Valve device according to one of the preceding claims, **characterised in that** the valve element (12) comprises a circumferential groove (17) for partially receiving the sealing element (18).

4. Valve device according to one of the preceding claims, **characterised in that** the housing (2) comprises a further axial stop for the radial projection (21), which is arranged at a distance from the axial stop (29) in such a way that the radial projection (21) can only be displaced axially between the axial stops.

5. Valve device according to one of the preceding claims, **characterised in that** the further axial stop is formed in or on the housing projection (6).

6. Valve device according to one of the preceding claims, **characterised in that** the inlet connection (3) and/or the outlet connection (4) open radially into the media channel (5).

7. Valve device according to one of the preceding claims, **characterised in that** the valve element (12) is located at least substantially independently of its sliding position at least partially in the region of the inlet channel in the media channel (5).

8. Valve device according to one of the preceding claims, **characterised in that** the housing projection (6) is formed by a housing flange (7) and a cover (8) arranged on the front side of the housing flange (7), wherein a heat conducting mandrel (25) is arranged on the cover (8), in particular formed integrally with the cover (8).

9. Valve device according to claim 8, **characterised in that** the cover (10) forms the further axial stop.

10. Valve device according to one of the preceding claims, **characterised in that** the valve element (12) comprises a cup-shaped receiving recess (20) in which the first spring element (27) is partially inserted.

11. Valve device according to claim 8, **characterised in that** the valve element (12) comprises a cross-section which increases in the direction of the first spring element (27), and **in that** the media channel (5) comprises a cross-section which increases in the direction of the cover (8), so that the spring elements (15, 27) and the valve element (12) can be inserted into the media channel (5) through the housing flange (7).

12. Valve device according to one of the preceding claims, **characterised in that** a leakage gap (28) is provided between the valve element (12) and the housing flange (6).

13. Valve device according to one of the preceding claims, **characterised in that** the inlet connection (3) opens into the media channel (5) between the shoulder (29) and the valve seat (19).

14. Valve device according to one of the preceding claims, **characterised in that** the space of the housing (2) containing the first spring element (27) is permanently connected to the inlet connection (3) by the leakage gap (28).

15. Valve device according to one of the preceding claims, **characterised in that** the second spring element (15) is designed as a helical spring, pushed at one end onto an axial projection (13) of the valve element (12) and axially pretensioned between the valve element (12) and the housing (2).

16. Valve device according to one of the preceding claims, **characterised in that** the axial projection (13) protrudes axially at least substantially from the sealing element (18) and is designed in particular as a radial guide for at least one section of the second spring element (15).

## Revendications

1. Dispositif de soupape (1), en particulier soupape d'eau d'essuyage, comprenant un boîtier (2) qui présente un raccord d'entrée (3), un raccord de sortie (4) et un canal de fluide (5) reliant le raccord d'entrée (3) au raccord de sortie (4), et comprenant un élément de soupape (12) déplaçable qui est pressé par un premier élément de ressort (27) contre un siège de soupape (19) formé dans le boîtier (2) afin de fermer le canal de fluide (5), et qui est poussé par un deuxième élément de ressort (15) à l'écart du siège de soupape pour ouvrir le canal de fluide (5), le premier élément de ressort (27) étant fabriqué en un matériau thermiquement activable et présentant, sous un état désactivé, une première force de ressort qui est inférieure à celle du deuxième élément de ressort (15) et, sous un état activé, une deuxième force de ressort qui est supérieure à celle du deuxième élément de ressort (15) de telle manière que l'élément de soupape (12) est déplacé pour fermer le canal de fluide (5), le premier élément de ressort (27) étant maintenu au moins par sections dans une saillie de boîtier (6) en forme de cylindre creux, faisant saillie vers l'extérieur du boîtier (2), **caractérisé en ce qu'**un élément d'étanchéité (18) en particulier annulaire est disposé sur l'élément de soupape (12), lequel est conçu pour coopérer avec le siège de soupape (19) sous l'état activé du premier élément de ressort, et **en ce que** l'élément de soupape (12) présente, à une distance axiale de l'élément d'étanchéité (18) en direction de la saillie de boîtier (6), au moins une saillie radiale (21) qui est conçue pour coopérer avec au moins une butée axiale (29) formée dans le boîtier (2) à une distance axiale du siège de soupape (19) en direction du siège de soupape (19) pour limiter une déformation maximale de l'élément d'étanchéité (18).

2. Dispositif de soupape selon la revendication 1, **caractérisé en ce que** l'élément d'étanchéité (18) est conçu comme un élément élastomère, en particulier comme un joint torique.

3. Dispositif de soupape selon l'une des revendications précédentes, **caractérisé en ce que** l'élément de soupape (12) présente une rainure périphérique (17) pour recevoir par zones l'élément d'étanchéité (18).

4. Dispositif de soupape selon l'une des revendications précédentes, **caractérisé en ce que** le boîtier (2) présente une autre butée axiale pour la saillie radiale (21), qui est disposée à distance de la butée axiale (29) de telle sorte que la saillie radiale (21) ne peut être déplacée axialement qu'entre les butées axiales.

5. Dispositif de soupape selon l'une des revendications précédentes, **caractérisé en ce que** l'autre butée axiale est formée dans ou sur la saillie de boîtier (6).

6. Dispositif de soupape selon l'une des revendications précédentes, **caractérisé en ce que** le raccord d'entrée (3) et/ou le raccord de sortie (4) débouchent radialement dans le canal de fluide (5).

7. Dispositif de soupape selon l'une des revendications précédentes, **caractérisé en ce que** l'élément de soupape (12) se trouve au moins sensiblement indépendamment de sa position de coulissement au moins par sections dans la zone du canal d'alimentation dans le canal de fluide (5).

8. Dispositif de soupape selon l'une des revendications précédentes, **caractérisé en ce que** la saillie de boîtier (6) est formée par une bride de boîtier (7) et un couvercle (8) disposé frontalement sur la bride de boîtier (7), un mandrin thermoconducteur (25) étant disposé sur le couvercle (8), en particulier réalisé d'une seule pièce avec le couvercle (8).

9. Dispositif de soupape selon la revendication 8, **caractérisé en ce que** le couvercle (10) constitue l'autre butée axiale.

10. Dispositif de soupape selon l'une des revendications précédentes, **caractérisé en ce que** l'élément de soupape (12) présente un renfoncement de réception (20) en forme de godet, dans lequel le premier élément de ressort (27) est enfiché par zones.

11. Dispositif de soupape selon la revendication 8, **caractérisé en ce que** l'élément de soupape (12) présente une section transversale qui augmente en direction du premier élément de ressort (27), et **en ce que** le canal de fluide (5) présente une section transversale qui augmente en direction du couvercle (8), de sorte que les éléments de ressort (15, 27) et l'élément de soupape (12) peuvent être introduits dans le canal de fluide (5) à travers la bride de boîtier (7).

12. Dispositif de soupape selon l'une des revendications précédentes, **caractérisé en ce qu'**il existe un espace de fuite (28) entre l'élément de soupape (12) et la bride de boîtier (6).

13. Dispositif de soupape selon l'une des revendications précédentes, **caractérisé en ce que** le raccord d'alimentation (3) débouche dans le canal de fluide (5) entre la butée axiale (29) et le siège de soupape (19).

14. Dispositif de soupape selon l'une des revendications précédentes, **caractérisé en ce que** l'espace du boîtier (2) contenant le premier élément de ressort (27) est relié de manière permanente, du point de vue de la technique des fluides, au raccord d'alimentation (3) par l'espace de fuite (28).

15. Dispositif de soupape selon l'une des revendications précédentes, **caractérisé en ce que** le deuxième élément de ressort (15) est conçu comme un ressort hélicoïdal, est enfilé à une extrémité sur une saillie axiale (13) de l'élément de soupape (12) et est précontraint axialement entre l'élément de soupape (12) et le boîtier (2).

16. Dispositif de soupape selon l'une des revendications précédentes, **caractérisé en ce que** la saillie axiale (13) fait au moins sensiblement saillie axialement de l'élément d'étanchéité (18) et est en particulier conçue comme un guide radial pour au moins une partie du deuxième élément de ressort (15).
